# EUROPÄISCHE PATENTANMELDUNG

(11) **EP 1 223 286 A2**
(43) Veröffentlichungstag der Anmeldung: **17.07.2002**
(21) Anmeldenummer: 01130388.0
(22) Anmeldetag: 20.12.2001
(51) Int. Cl.: E05F 15/12, F16H 57/02

(54) **Antrieb**

(30) Priorität: 21.12.2000 DE 10063743
(71) Anmelder: GEZE GmbH, 71229 Leonberg (DE)
(72) Erfinder: Habicht, Olaf, 73431 Aalen (DE); Linnemann, Ulf, 30451 Hannover (DE)

(57) **Zusammenfassung**

Es wird ein Antrieb (1) für einen beweglich an einem ortsfesten Rahmen gelagerten Flügel (18) eines Fensters oder einer Tür beschrieben, insbesondere zum Einsatz in einer äußeren Umgebung (22) mit hoher Luftfeuchtigkeit und/oder Spritzwasser, z.B. im Außenbereich.

Die Gehäusewandung des Antriebsgehäuse (2) umschließt einen Gehäuseinnenraum (3). Ein axial verschiebbares Abtriebsglied (7) tritt aus einer Öffnung (6) des Antriebsgehäuses (2) aus und ist direkt oder indirekt mit dem beweglichen Flügel (18) kraftschlüssig verbunden. Der aus dem Gehäuseinnenraum (3) des Antriebsgehäuses (2) herausverschiebbare Abschnitt des Abtriebsglieds (7) weist ein Volumen auf, welches bei der axialen Verschiebung des Abtriebsglieds (7) aus dem Antriebsgehäuse (2) heraus durch ein entsprechendes, aus der äußeren Umgebung (22) des Antriebsgehäuses (2) durch die Öffnung (6) des Antriebsgehäuses (2) in den Gehäuseinnenraum (3) einströmendes Luftvolumen ersetzt wird.

Um zu vermeiden, dass mit dem einströmenden Luftvolumen Feuchtigkeit in den Innenraum (3) des Antriebsgehäuses (2) eindringt, ist der Luftdruckausgleich zwischen der äußeren Umgebung (22) und dem Gehäuseinnenraum (3) des Antriebsgehäuses (2) durch eine in Richtung des Gehäuseinnenraums (3) feuchtigkeitsdichte Luftleitvorrichtung (12, 14) im Antriebsgehäuse (2) bewirkt.

## Beschreibung

Die Erfindung betrifft einen elektrischen Antrieb für einen beweglich an einem ortsfesten Rahmen gelagerten Flügel, mit den Merkmalen des Oberbegriffs des Anspruchs 1.

Aus der DE 42 37 385 A1 ist ein elektrischer Antrieb für einen Kipp- oder Klappflügel, z.B. für eine Lüftungsanlage, Rauch- und Wärmeabzugsanlage oder dergleichen, bekannt. Das Antriebsgehäuse ist am Flügel oder am Blendrahmen abgestützt, indem es an einer Konsole schwenkbar gelagert ist. Im Antriebsgehäuse ist ein elektrischer Antriebsmotor angeordnet, dessen Abtriebswelle mit einer Gewindespindel drehfest verbunden ist. Die Gewindespindel wird von einer Spindelmutter umgriffen, wobei die Spindelmutter mit einer aus einer Öffnung des Antriebsgehäuses austretenden, dort in einem Schiebelager geführten Schubstange verbunden ist. Die Schubstange ist mit dem Flügel gelenkig verbunden; bei Betätigung des Antriebsmotors bewirkt das Verschieben der Schubstange eine Schwenkbewegung des Flügels.

Derartige Antriebe sind häufig, insbesondere bei Außenmontage, jedoch auch bei Innenmontage und geöffnetem Flügel, ungünstigen Bedingungen, insbesondere hoher Luftfeuchtigkeit und/oder Spritzwasser ausgesetzt. Das Gehäuse an sich kann gegen das Eindringen von Feuchtigkeit hermetisch abgedichtet werden; im Austrittsbereich der Schubstange ist zwischen Schubstange und Gehäuse eine hermetische Abdichtung jedoch konstruktionsbedingt nicht möglich, da aufgrund der Relativbewegung zwischen Schubstange und Gehäuse ein Spalt zwischen Schubstange und Gehäuse verbleibt, der lediglich durch eine elastische Dichtung abgedeckt sein kann, welche die axiale Bewegung der Schubstange nicht behindern darf. Derartige Dichtungen, z.B. Bürstendichtungen oder elastische Gummidichtungen, sind jedoch unter bestimmten Umständen luft- und feuchtigkeitsdurchlässig. Hinzu kommt, dass eine axiale Bewegung der Schubstange aus dem Gehäuse heraus eine Verringerung des Volumens des im Gehäuseinnenraum befindlichen Schubstangenabschnitts und somit einen Unterdruck der im Gehäuseinnenraum befindlichen Luft verursacht, d.h. dass zum Druckausgleich Luft aus der Außenumgebung in das Antriebsgehäuse eintritt. Dadurch können Luftfeuchtigkeit und/oder Wasser in das Antriebsgehäuse eindringen. Die dann im Gehäuse befindliche Feuchtigkeit kann dort kondensieren und zu Beschädigungen, z.B. Kurzschlüsse und/oder Korrosion, an den dort befindlichen elektrischen und/oder mechanischen Antriebskomponenten führen.

Dieser Nachteil beschränkt sich nicht nur auf die vorangehend beschriebenen Spindelantriebe; prinzipiell kann dieses Feuchtigkeitsproblem bei allen Arten von Fenster- und/oder Türantrieben auftreten, welche ein durch eine Öffnung des Antriebsgehäuses geführtes bewegliches Abtriebsglied aufweisen, durch dessen Bewegung Luft in das Antriebsgehäuse eindringen kann. Zwischen dem Antriebsmotor und dem Abtriebsglied kann - wie vorangehend beschrieben - ein Getriebe angeordnet sein, welches die Drehbewegung der Abtriebswelle des Antriebsmotors in eine Stellbewegung des Abtriebsglieds umsetzt. Alternativ kann das Abtriebsglied des Antriebsmotors zugleich als Abtriebsglied des Antriebs ausgebildet sein. So sind außer Antrieben mit elektrischem Antriebsmotor mit rotierender Abtriebswelle auch Antriebe elektrischen Linearmotoren sowie Antriebe mit pneumatischen oder hydraulischen Antriebskomponenten denkbar.

Der Erfindung liegt die Aufgabe zugrunde, einen Antrieb der eingangs genannten Art zu schaffen, in welchen auch bei durch Luftdruckdifferenzen verursachtem Lufteintritt keine Feuchtigkeit eindringen kann.

Diese Aufgabe löst die Erfindung mit dem Gegenstand des Anspruchs 1.

Zwischen der äußeren Umgebung und dem Gehäuseinnenraum des Antriebsgehäuses ist eine als luftdurchlässige und zugleich wasserdichte Belüftungs- und Entlüftungseinrichtung ausgebildete Luftleitvorrichtung angeordnet, und zwar in einer Öffnung der Außenwandung des Antriebsgehäuses.

Die Belüftungs- und Entlüftungseinrichtung ist vorteilhafterweise als Membran ausgebildet. Die Membran ist ein dünnschichtiges Element, welches dem Durchtritt bestimmter Medien - hier Luft - erlaubt und den Durchtritt anderer Medien - hier Wasser - sperrt. Die Membran kann flexibel oder starr ausgebildet sein.

Je nach Ausgestaltung der Membran kann diese direkt in die Gehäusewandung aufgenommen sein oder in einem separaten Einsatz eingespannt sein, welcher in die Gehäusewandung eingesetzt wird.

Bei auftretenden Druckdifferenzen zwischen der Umgebung und dem Gehäuseinnenraum findet der Druckausgleich über die Membran der Belüftungs- und Entlüftungseinrichtung und nicht über die Dichtung zwischen dem Abtriebsglied und der Gehäusewandung statt. Durch die luftdurchlässige und zugleich wasserdichte Ausgestaltung der Membran der Belüftungs- und Entlüftungseinrichtung ist somit sichergestellt, dass bei einem Luftaustausch zwischen der äußeren Umgebung und dem Gehäuseinnenraum keine Feuchtigkeit in den Gehäuseinnenraum eindringt.

Um auch den Auswirkungen eines eventuellen Eindringens einer Restfeuchtigkeit auf anderen Wegen, z.B. dem Antriebsglied anhaftender Feuchtigkeit, entgegenzuwirken, kann vorgesehen sein, dass im Innenraum des Antriebsgehäuses Lufttrocknungsmittel angeordnet sind. Diese binden die eventuell im Gehäuseinnenraum auftretende Restfeuchtigkeit.

Alternativ oder zusätzlich kann vorgesehen sein, dass die vorangehend beschriebene Belüftungs- und Entlüftungseinrichtung nur in einer Richtung, nämlich - als Belüftungseinrichtung wirkend - für in das Gehäuse einströmende Luft durchlässig ist und also den Luftaustritt aus dem Gehäuse sperrt. Bei im Gehäuseinnenraum auftretendem Überdruck tritt die Luft dann zusammen mit eventuell vorhandener Restfeuchtigkeit auf anderem Wege aus dem Gehäuse aus.

Alternativ oder zusätzlich können im Gehäuseinnenraum Heizeinrichtungen angeordnet sein, welche die im Gehäuseinnenraum befindliche Luft erwärmen.

Alternativ oder zusätzlich, insbesondere in Kombination mit diesen Heizeinrichtungen, sind zusätzliche Entlüftungseinrichtungen vorteilhaft, welche einen Luft- und/oder Feuchtigkeitsdurchtritt nur in einer Richtung ermöglichen, nämlich aus dem Gehäuseinnenraum hinaus, und in der anderen Richtung sperren. Die Funktion dieser zusätzlichen Entlüftungseinrichtungen, die mit der ausströmenden Luft insbesondere die eventuell vorhandene Restfeuchtigkeit aus dem Antriebsgehäuse hinausbefördern, kann durch Zwangsentlüftungen, z.B. Ventilatoren, unterstützt werden.

Im nachfolgenden wird ein Ausführungsbeispiel anhand der Figuren näher erläutert.

Dabei zeigen:
- **Figur 1**: eine schematische Seitenansicht eines mit elektrischem Antrieb ausgerüsteten Klappfensters in geschlossener Stellung;
- **Figur 2**: eine schematische Seitenansicht eines mit elektrischem Antrieb ausgerüsteten Klappfensters gemäß Figur 1 in offener Stellung;
- **Figur 3**: einen Schnitt im Bereich des Antriebsgehäuses des Antriebs gemäß Figur 1 und 2;
- **Figur 4**: einen Schnitt im Bereich des Antriebsgehäuses eines Kettenantriebs.

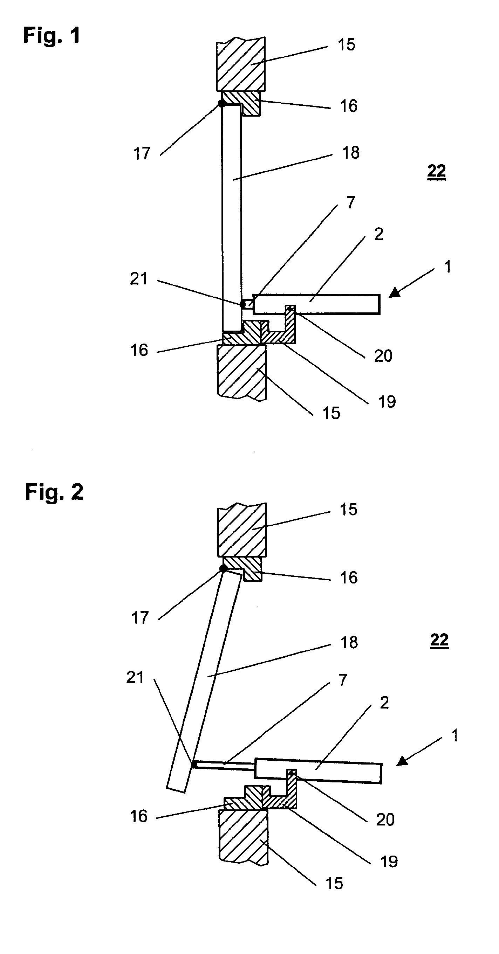

Bei dem in den **Figuren 1** und **2** dargestellten Antrieb 1 handelt es sich um einen sogenannten Schubstangenantrieb. Der angetriebene Flügel 18 ist mittels im oberen horizontalen Bereich des Blendrahmens 16 angeordneter Drehgelenke 17, z.B. Bänder, um eine horizontale Achse schwenkbar gelagert. Das Gehäuse 2 des Antriebs 1 ist in einer im unteren Bereich des Blendrahmens 16 bzw. der Wand 15 ortsfest angeordneten Konsole 19 um einen Drehpunkt 20 schwenkbar gelagert; es ist von einem Umgebungsmedium 22 umgeben. Elektrische Zuleitungen zum Antrieb 1 sind vorhanden, hier jedoch nicht dargestellt; aufgrund der Schwenkbarkeit des Antriebsgehäuses 2 ist die elektrische Zuleitung bevorzugt flexibel, z.B. in Form eines Kabels, ausgeführt. Der Antrieb 1 weist als Abtriebsglied eine parallel zur Antriebsgehäuselängsachse verschiebbare Schubstange 7 auf; bei Betätigung des Antriebs 1 wird die Schubstange 7 aus dem Antriebsgehäuse herausgeschoben bzw. in das Antriebsgehäuse 2 hineingezogen. An ihrem dem Antriebsgehäuse 2 abgewandten stirnseitigen Ende ist die Schubstange 7 mittels eines Drehgelenks 21 an dem beweglichen Flügel 18 angeschlossen. Wie in Zusammenschau der Figuren 1 und 2 erkennbar, bewirkt ein Herausschieben der Schubstange 7 aus dem Gehäuse 2 des Antriebs 1 eine Öffnungsbewegung des Flügels 18 in Form einer Klappbewegung; aufgrund der geometrischen Lage der Drehgelenke 17, 20, 21 zueinander ergibt sich zugleich eine Schwenkbewegung des Antriebsgehäuses 2 um den Drehpunkt 20 der Konsole 19. Der maximale Klappwinkel des Flügels 18 ist vorgegeben durch den maximalen Verstellweg der Schubstange 7 sowie durch die geometrische Lage der Drehgelenke 17, 20, 21 zueinander.

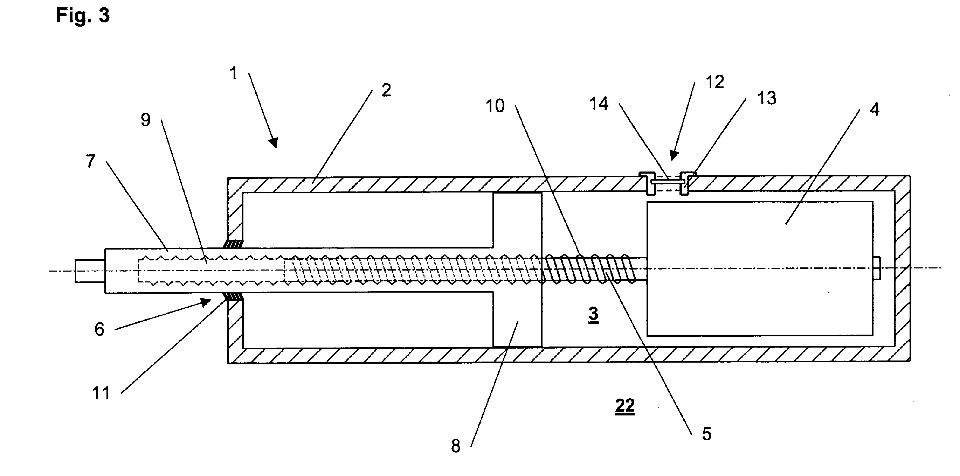

**Figur 3** zeigt einen Längsschnitt durch das Gehäuse 2 des Antriebs 1. Das Antriebsgehäuse 2 umschließt einen Gehäuseinnenraum 3, in welchem ein elektrischer Antriebsmotor 4 angeordnet ist. Die Abtriebswelle 5 des Antriebsmotors 4 ist parallel zur Längsachse des Gehäuses 2 angeordnet und drehfest mit einer ebenfalls parallel zur Gehäuselängsachse angeordneten Gewindespindel 10 verbunden. Die Gewindespindel 10 wird von einer Bohrung 9 des als Schubstange 7 ausgebildeten Abtriebsglieds umgriffen; eine Drehbewegung der Gewindespindel 10 bewirkt somit eine Verschiebebewegung der Schubstange 7. Anstatt der in der Schubstange 7 angeordneten Bohrung 9 kann alternativ auch eine fest mit der Schubstange 7 verbundene Spindelmutter vorgesehen sein, welche die Gewindespindel 10 umgreift. Die Schubstange 7 ist im Gehäuse 2 mittels einer Führung 8 und gehäusestirnseitig in einer weiteren, im Bereich der stirnseitigen Gehäuseöffnung 6 angeordneten Schiebeführung verschiebbar geführt. An ihrem freien Ende weist die Schubstange 7 einen Anschluss für die Verbindung mit dem Flügel 18 auf.

Die an der Stirnseite des Gehäuses 2 angeordnete Austrittsöffnung 6 für die Schubstange 7 ist gegenüber der Schubstange 7 mittels einer Dichtung 11 abgedichtet. Da die Dichtung 11 die Relativbewegung zwischen der Schubstange 7 und der Austrittsöffnung 6 des Antriebsgehäuses 2 nicht behindern darf, ist sie als elastische Dichtung, hier als Bürstendichtung 11 ausgebildet.

In der Außenwandung des Antriebsgehäuses 2 ist eine weitere Gehäuseöffnung 12 vorhanden. In diese Gehäuseöffnung 12 ist ein Einsatz 13 eingesetzt, wobei der Einsatz 13 luft- und flüssigkeitsdicht zum Gehäuse 12 abgedichtet ausgebildet ist. Der Einsatz 13 trägt eine Membran 14, welche zwar luftdurchlässig, jedoch undurchlässig für Flüssigkeiten ausgebildet ist.

Wird der Antrieb 1 im Öffnungssinne betrieben, d.h. wird die Schubstange 7 aus dem Antriebsgehäuse 2 herausbewegt, so verringert sich das im Innenraum 3 des Antriebsgehäuses befindliche Volumen der Schubstange 7. Um den dabei entstehenden Unterdruck im Innenraum 3 des Gehäuses 2 auszugleichen, strömt aus der äußeren Umgebung Luft in das Innere 3 des Antriebs 1. Da die Membran 14 der Belüftungs- und Entlüftungseinrichtung der einströmenden Luft keinen nennenswerten Widerstand entgegensetzt, strömt die zum Druckausgleich gegenüber der äußeren Umgebung 22 benötigte Luft ausschließlich über diese Belüftungs- und Entlüftungseinrichtung 14 in den Gehäuseinnenraum 3. Somit ist sichergestellt, dass mit der einströmenden Luft keine Feuchtigkeit in den Gehäuseinnenraum 3 eindringt.

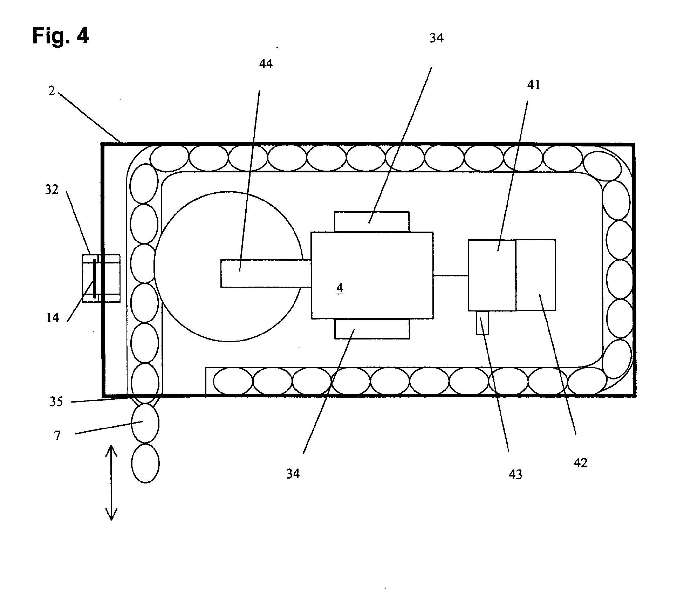

**Figur 4** zeigt einen Schnitt durch das Gehäuse 2 eines als Kettenantrieb ausgebildeten Antriebs 1, wobei das Abtriebsglied 7 als einseitig biegbare Kette ausgebildet ist. Das Gehäuse 2 ist in einem Profilrahmen aufnehmbar oder kann auch außen auf einem Profilrahmen oder einer Wand aufliegend angeordnet werden. Dabei ist zum einen Montage des Antriebs an dem ortsfesten Teil des Fenster möglich, wie auch die Montage des Antriebs auf dem beweglichen Flügel.

Das Gehäuse 2 ist geschlossen ausgebildet und weist an seiner Längsseite eine Öffnung auf, durch die die Kette 7 hindurchgreift. Um die Öffnung umlaufend sind Dichtungs- und/oder Reinigungsbürsten 35 angeordnet, die zum einen die Öffnung abdichten und zum anderen die Kette 7 von Schmutz reinigen.

Die Kette 7 ist innerhalb des Gehäuses 2 umlaufend geführt und wird von dem Antriebsmotor 4 über ein Getriebe 44 angetrieben. In Schließstellung des Fensters ist die Kette 7 weitgehend innerhalb des Gehäuses 2 angeordnet und verdrängt somit ein gewisses Volumen an Luft. In Offenstellung des Fensters ist die Kette 7 mehr oder weniger weit aus dem Gehäuse 2 herausgefahren und somit verbleibt ein leeres Volumen in dem Gehäuse 2, das durch Zustrom von Luft ausgefüllt wird.

In der Gehäusewand ist daher eine Druckausgleichsöffnung mit dem Ventil 32 angeordnet. Das Ventil weist einen in die Druckausgleichsöffnung dicht einschraubbaren Einsatz auf, der von der Membran 14 verschlossen ist. Die Membran 14 ist durchlässig für Luft, jedoch undurchlässig für Flüssigkeiten bzw. Staub oder Schmutzpartikel. Das Gehäuse 2 ist dicht geschlossen und weist einen hohen Luftdurchgangswiderstand auf. Die Membran 14 bzw. der Querschnitt des Ventils 32 und/oder der Druckausgleichsöffnung ist so gewählt, dass das durch das Bewegen der Kette 7 mit der Umgebung ausgetauschte Luft-Volumen zum größten Teil, vorzugsweise vollständig durch die Membran 14 hindurchströmt. Somit wird ein Eintritt von Wasser oder Schmutz in das Gehäuse 2 verhindert.

Bei ungünstigen Bedingungen, z.B. bei Temperaturschwankungen und hoher Luftfeuchtigkeit kann es vorkommen, dass innerhalb des Gehäuses 2 Wasser aus der Luft kondensiert. Um dieses zu verhindern, weist das Gehäuse 2 ein Trocknungsmittel 34 auf. Das Trocknungsmittel 34 nimmt diese eventuelle Restfeuchtigkeit auf. Ein erschöpftes Trocknungsmittel 34 kann im Rahmen einer Wartung einfach ausgetauscht werden.

Um einen Einsatz auch unter extremen Klimabedingungen zu erlauben, weist das Gehäuse 2 auch eine Heizung 42 mit Steuerungsvorrichtung 41 auf. Ein mit der Steuerungsvorrichtung 41 verbundener Sensor misst die Temperatur und/oder die Luftfeuchtigkeit des Gehäuseinneren. Bei Überschreiten eines Grenzwertes schaltet die Steuerungsvorrichtung 41 die Heizung 42 ein.

### Liste der Referenzzeichen:

- 1: Antrieb
- 2: Antriebsgehäuse
- 3: Gehäuseinnenraum
- 4: Antriebsmotor
- 5: Abtriebswelle
- 6: Gehäuseöffnung
- 7: Abtriebsglied
- 8: Schiebeführung
- 9: Bohrung
- 10: Gewindespindel
- 11: Dichtung
- 12: Gehäuseöffnung
- 13: Einsatz
- 14: Dichtungsmembran
- 15: Wand
- 16: Blendrahmen
- 17: Gelenk
- 18: Flügel
- 19: Konsole
- 20: Gelenk
- 21: Gelenk
- 22: Umgebung
- 32: Ventil
- 34: Trocknungsmittel
- 35: Bürste
- 41: Steuerung
- 42: Heizung
- 43: Sensor
- 44: Getriebe

## Patentansprüche

1. Antrieb (1) für einen beweglich an einem ortsfesten Rahmen gelagerten Flügel (18) eines Fensters oder einer Tür, insbesondere zum Einsatz in einer äußeren Umgebung (22) mit hoher Luftfeuchtigkeit und/oder Spritzwasser, z.B. im Außenbereich,
mit einem Antriebsgehäuse (2) mit einer Gehäusewandung, welche einen Gehäuseinnenraum (3) umschließt,
mit einem axial verschiebbaren Abtriebsglied (7), welches aus einer Öffnung (6) des Antriebsgehäuses (2) austritt und direkt oder indirekt mit dem beweglichen Flügel (18) kraftschlüssig verbunden ist,
wobei der aus dem Gehäuseinnenraum (3) des Antriebsgehäuses (2) herausverschiebbare Abschnitt des Abtriebsglieds (7) ein Volumen aufweist, welches bei der axialen Verschiebung des Abtriebsglieds (7) aus dem Antriebsgehäuse (2) heraus durch ein entsprechendes, aus der äußeren Umgebung (22) des Antriebsgehäuses (2) in den Gehäuseinnenraum (3) einströmendes Luftvolumen ersetzt wird,
**dadurch gekennzeichnet,**
**dass** der Luftdruckausgleich zwischen der äußeren Umgebung (22) und dem Gehäuseinnenraum (3) des Antriebsgehäuses (2) durch eine in Richtung des Gehäuseinnenraums (3) feuchtigkeitsdichte Luftleitvorrichtung (12, 14) im Antriebsgehäuse (2) bewirkt ist.

2. Antrieb nach Anspruch 1,
**dadurch gekennzeichnet, dass** die Luftleitvorrichtung eine Belüftungs- und Entlüftungsvorrichtung (14) aufweist.

3. Antrieb nach Anspruch 2,
**dadurch gekennzeichnet, dass** die Belüftungs- und Entlüftungseinrichtung als Membran (14) ausgebildet ist.

4. Antrieb nach Anspruch 3,
**dadurch gekennzeichnet, dass** die Membran (14) eine Gehäuseöffnung (12) des Antriebsgehäuses (2) überspannt.

5. Antrieb nach Anspruch 3 oder 4,
**dadurch gekennzeichnet, dass** die Membran (14) in einem Rahmen (13) gehalten ist, der in der Gehäusewandung des Antriebsgehäuses (2) festlegbar ist.

6. Antrieb nach Anspruch 1,
**dadurch gekennzeichnet, dass** der bewegliche Flügel als schwenkbar gelagerter Flügel (18), insbesondere Drehflügel oder Kippflügel oder Klappflügel oder Schwingflügel, oder als verschiebbar gelagerter Flügel ausgebildet ist.

7. Antrieb nach Anspruch 1,
**dadurch gekennzeichnet, dass** das Abtriebsglied des Antriebs (1) als Schubstange (7) oder als flexibles Schubelement oder als Kette ausgebildet ist.

8. Antrieb nach Anspruch 1,
**dadurch gekennzeichnet, dass** im Gehäuseinnenraum (3) ein Lufttrocknungsmittel und/oder eine Heizeinrichtung angeordnet ist.

9. Antrieb nach Anspruch 1,
**dadurch gekennzeichnet, dass** eine zusätzliche Entlüftungsvorrichtung, vorzugsweise Zwangsentlüftungsvorrichtung, vorgesehen ist, welche eine Bewegung von Luft und/oder Feuchtigkeit aus dem Innenraum (3) des Antriebsgehäuses (2) hinaus ermöglicht und/oder verstärkt.

10. Antrieb nach Anspruch 9,
**dadurch gekennzeichnet, dass** die zusätzliche Entlüftungsvorrichtung eine Bewegung von Luft und/oder Feuchtigkeit in den Innenraum (3) des Antriebsgehäuses (2) hinein sperrt.

11. Antrieb nach Anspruch 1 oder 10,
**dadurch gekennzeichnet, dass** die Belüftungs- und Entlüftungseinrichtung (12, 14) nur für in den Innenraum (3) des Antriebsgehäuses (2) einströmende Luft durchlässig ist.
